# EUROPEAN PATENT SPECIFICATION

(11) **EP 1 522 425 B1**
(45) Date of publication and mention of the grant of the patent: **13.06.2007**
(21) Application number: 03425648.7
(22) Date of filing: 06.10.2003
(51) Int. Cl.: B60C 11/24

(54) **Automatic wear detecting system for tyres and tyre for said system**
Automatisches Verschleisswarnsystem für Reifen und entsprechende Reifen für dieses System
Système de détection d'usure automatique pour pneumatiques et pneumatiques pour un tel système

(43) Date of publication of application: 13.04.2005
(73) Proprietor: Eximia S.r.l., 20154 Milano (IT)
(72) Inventor: Di Floriano, Mario Dino, 20136 Milano (IT)
(74) Representative: Faggioni, Carlo Maria

(56) References cited:
- DE-A- 19 745 734
- FR-A- 2 816 887
- US-A1- 2003 005 760

## Description

The present invention relates to a system for the automatic detection of tyre wear, in particular for remote detection.

As is known, the tyres mounted on land vehicles (for example motorvehicles, but also aircraft equipped with an undercarriage) are made of elastomeric compounds (such as rubber-based materials) which guarantee the desired road holding but are inevitably subject to wear. Therefore, in order to guarantee a safe grip as well as the integrity of the tyre itself, it is necessary to carefully monitor the tyre condition and, in particular, the tread condition thereof.

In most cases tyre tread wear can be detected (at least in engraved tyres) by simple observation: this type of detection, however, requires a certain skill and technical knowledge which are not within everybody's reach, not to mention the fact the it is extremely difficult to perform such a check on tyres without tyre tread (for example on so-called "slick" tyres for competition vehicles, or on aircraft tyres). Besides, observation of the tread condition can occur only on a stationary tyre and with proper lighting.

Another system to more easily detect tyre wearing consists in the prearrangement of a series of marks, at a varying depth in the lugs or blocks of the tread, which become progressively evident on the tyre surface as wear makes the tread thinner. Examples of such marks are coloured inclusions in the tread compound or rubber bars inserted in the bottom of the tread lug which appear on the surface when the tread residue is, for example, 1.6 mm thin.

However, even this wear detection system is not convenient and requires in any case, like the one before, a voluntary and substantially manual intervention.

Instead, in view of the need to provide a great amount of information on tyre condition in an automatic way, remote detection devices have been designed which rely on sensors placed on the tyre or therein.

Some examples of remote detection and transmission devices of tyre condition are disclosed in WO99/29523, US 5483827, US 6386254, WO01/81104, and US 6340930.

WO03/064188, in particular, discloses a tyre wear detection system like the one described in the precharacterising part of the attached claim 1.

Most of these systems, however, address themselves to the task of acquiring locally on the tyre a quantity of interest (for example a pressure or an impedance) through a suitable sensor, and then to transmit the respective radio frequency signal to a receiving station which is stationary on the vehicle: therefore, in addition to complexity issues and system cost issues, there exists the pressing need to always ensure a correct functioning of all components, so as to prevent failure of the signal transmission and mis-functioning.

As is understandable, since a tyre is subject to significant stresses, ensuring that all sensors on it actively function for the whole useful life of the tread becomes an arduous task which is difficult to achieve.

Besides, none of the aforementioned systems allows to distinguish the indications coming from a variety of positions on the tyre and therefore the reading is normally an individual or average reading, not supplying information on abnormal or asymmetrical tyre condition.

This represents a significant drawback. As a matter of fact, as is known, depending on the load conditions of the vehicle, on the wheel static toe-in or camber angle, or on tyre pressure, the tread can wear more rapidly along the centreline (central wear), in proximity to both the shoulders (symmetrical side wear) or only at one of the two shoulders (non-symmetrical side wear). It would therefore be desirable to be able to have more comprehensive information in order to also obtain information about uneven wear, which would not be economically viable with the systems of the known art.

Further, FR 2816887 discloses a system for the detection of tyre wear which uses a number of identical marking elements embedded in the tyre tread and apt to be detected - through optical, acoustic or magnetic systems - only when they come out in presence of wear.

JP10-307981 discloses a tyre wear detection system wherein a transponder 10 is provided in the tyre, the signal of which is read by a respective antenna 20c arranged on the body side facing detecting parts 10. When the tyre is worn, detecting part 10 is revealed and destroyed.

US2002/116992, corresponding with the preamble of claim 1, discloses a system entirely similar to that of JP10-307981, in which, however, a plurality of transponders (20, 22) is employed, arranged across the width of the tyre tread.

It is therefore an object of the present invention to provide a tyre tread wear detection system which, while operating in an automatic and remote manner, is extremely simple and reliable as well.

It is a further object of the invention to provide such a system that allows to distinguish the wear condition on different portions of the tread, in order to be able to intervene promptly on operating parameters (for example pressure, static toe-in, balancing, ...) and remove any abnormalities.

Finally, another object is to provide a tyre intended for use with such a detection system.

These objects are achieved through a system and a tyre as described in their essential features in the attached main claims.

Other inventive aspects are described in the dependent claims.

Further characteristics and advantages of the system and of the tyre according to the invention will in any case be clearer from the following detailed description of a preferred embodiment thereof, given by way of example and illustrated in the attached drawings, wherein:
fig. 1 is a transversal cross-section view of an exemplary tread portion of a tyre according to the invention;
fig. 2 is a diagrammatic elevation front view of a tyre portion according to a first preferred embodiment;
fig. 3 is a diagrammatic view similar to that shown in fig. 2 of another preferred embodiment of the invention;
fig. 4 is a diagrammatic view of a complete system according to the invention; and
fig. 5 shows two exemplary tables of readings of the system of the invention.

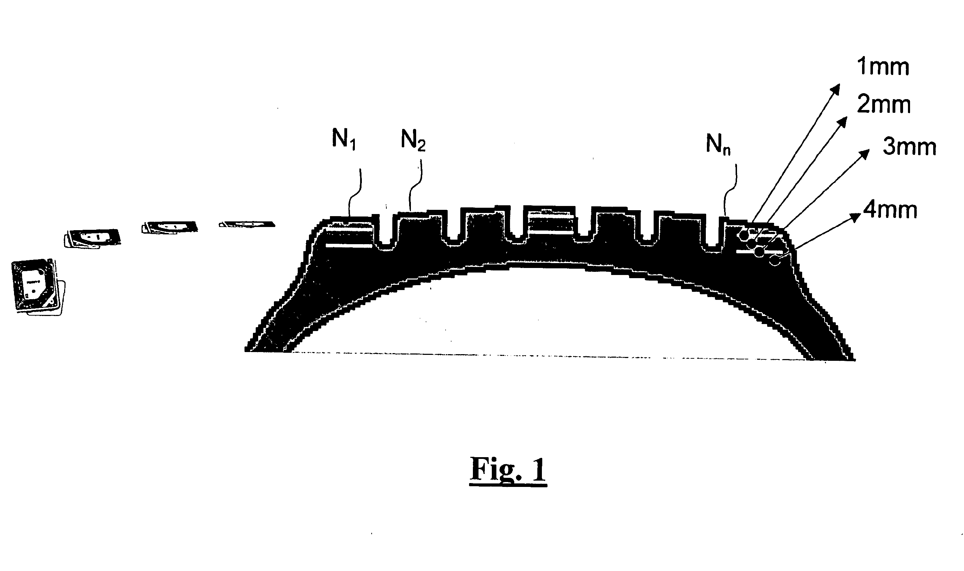

In fig. 1 an exemplary cross-section of a tyre tread is illustrated, wherein the various blocks N₁-Nₙ of the tyre portion subject to wear may be easily appreciated.

According to the invention, inside the tread blocks one or more transponder TAGs are embedded, in particular passive RFID components (Radio Frequency Identification Device).

Such RFID components are known per se (see for example those identified in the ISO 14443 and ISO 15693 standards) and basically consist of a standard microchip, operating by means of radio frequency waves (low frequency 100 - 150 kHz, medium frequency 13.5 MHz or high frequency 2.5 - 5 GHz), equipped with an own spiral-type aerial, all of which is supported by various kinds of carriers.

The prerogative of this technology, known in the field of the identification and counterfeit-proof systems (smart label), consists in the fact that inside a tiny chip (both in terms of width and thickness), advantageously of a passive-type (i.e. not powered), it is possible to store a certain amount of data - in particular a unique identification (ID) number (for example a 128-bit number) and other data in a suitable memory area (for example a 256-bit memory area) - which can later be remotely read (within a 25-120 cm field) energising the above-mentioned spiral-type aerial through the electro-magnetic field generated by suitable reading antennas.

Generally, the unique identification number, also known as "serial number" of the RFID, is preset by the manufacturer, whereas the end user can determine and customise (during assembling or before use through writing techniques, even repeatable ones) the contents of the additional memory.

These RFIDs also have the merit of being relatively impervious to environmental conditions and to radio frequency noise, as well as being extremely inexpensive (of the order of a few tenths of a Euro).

Although RFIDs can be both read-only (type A) or read-and-write (type B) ones, to the purpose of the present invention, it is mainly significant that the data contained in the microchip can be remotely read.

An exemplary RFID can have a plan size of 1 mm² and a thickness of a few microns, hence it can be easily embedded in a tread block without significantly affecting its functioning and structural resistance.

According to the invention, for example, at least three medium-frequency (13.5 MHz) RFIDs are provided, inserted at various depths in the tread.

In fig. 1 four RFIDs are shown by way of example inserted in the tread blocks at increasing depths of 1 mm, 2 mm, 3 mm, and 4 mm, but it is understood that the number and the in-depth arrangement of these RFIDs can vary according to the specific requirements (for example a lorry tyre could have a smaller number of RFIDs than the tyre of a racing car).

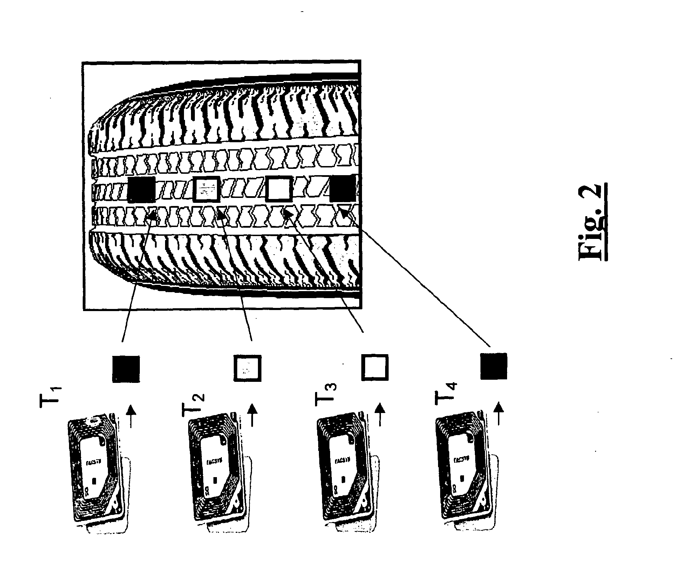

In order to minimise the incidence on the lugs, again the series of RFIDs is inserted at various depths into sequential blocks which are circumferentially staggered, as shown in fig. 2 with RFIDs T₁, T₂, T₃, T₄ located at 1 mm, 2 mm, 3 mm and 4 mm depths.

The RFIDs can be embedded in the tread lugs in various ways, for example by arranging them in the manufacturing mould during the injection or vulcanisation phase of the rubber compound, or by inserting them in a finished tyre through suitable syringes or insertion tools.

The system according to the invention further provides for a detection antenna A, integral with the vehicle, to be located in proximity to the tyre (fixed, for example, onto the mudguard of a vehicle), in order to detect the identity of the RFIDs which roll by during the revolution of the wheel. The signal received by the antenna is then sent to a control unit located on board the vehicle, which unit is capable of handling the signal received, of interpreting it, processing it, possibly comparing it with an internal database and then making it visible to the user, for example in the form of warning messages on a display. The display can be a specific LCD (not shown) or, advantageously, the same display of the on-board computer which many vehicles are now equipped with as standard.

In an original way, the system of the invention simply provides for
the detection of the presence or absence of the individual RFIDs, of which it is capable of ascertaining the position on the basis of the data present in the relative chip,
and for tyre wear determination from the difference between the number and the identity of the detected RFIDs, and the number and the identity of the same known for a new or unworn tyre.

This very simple and reliable measurement is based on the principle that, as the tread wears out and grows thin, the RFIDs are progressively destroyed or made inoperative, beginning from the outer ones, to the most deeply embedded ones.

The system, identifying the RFIDs still functioning and positioned, is therefore capable of automatically processing a signal proportional to the tread wear. If the system is then trained (by inserting suitable parameters and threshold values into the control unit) on what is the minimum thickness tolerated in order for the tread to remain within the safety limits, it is capable of updating or alerting the user as the preset threshold value draws near.

The solutions to allow the detection system to correctly associate the identification of a RFID with its position and depth within the tread lug (the so-called mapping of RFIDs) can be diverse. For example, the control unit can be provided with a database - which can be supplied by the tyre manufacturer - in which each unique serial number of the RFIDs is associated with the indication of the tyre type and model onto which it is mounted and with the location of the same on the tread. Alternatively, the tyre manufacturer can use in a standard way part of the RFID identification code to establish its location and in-depth position: for example, all the serial numbers ending in "4" are located at 4 mm from the minimum tolerable level of tread thickness, those ending in "3" are located at 3 mm from such level, and so on.

Alternatively, according to an advantageous embodiment of the invention, at least one of the RFIDs mounted on the tyre - typically the one that is expected to function the longest, or a special RFID located on the shoulders - includes, in addition to its unique ID, also additional information about the tyre type and about the arrangement of the other RFIDs present on the tyre. In other words, the database containing the RFID mapping is located on the tyre rather than on board the control unit. Accordingly, the control unit is capable of reading this information in order to derive tyre wear information.

This arrangement is extremely advantageous because it allows each tyre manufacturer to do as he thinks is best, provided he makes sure that the data sufficient for the control unit to correctly interpret the signals received are inserted in the reference RFID.

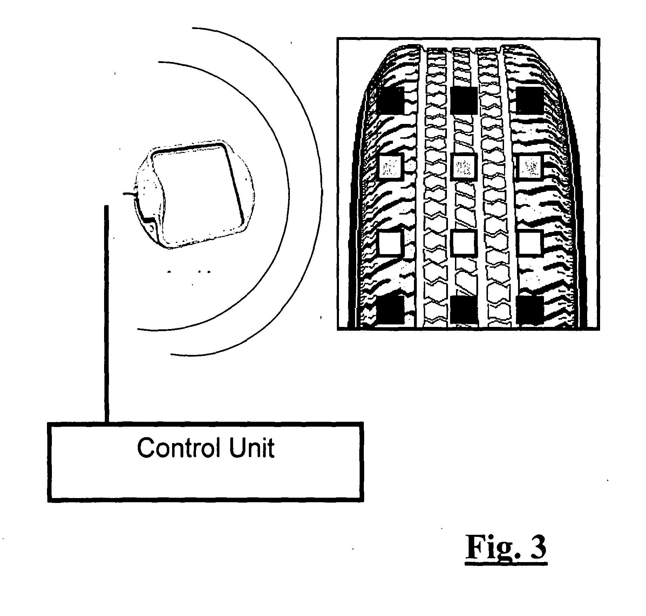

According to a further preferred embodiment of the invention, each tyre does not have only one series of RFIDs at various depths, but comprises a plurality of series of RFIDs located at various tyre positions. For example, as shown in fig. 3, a series on the left-hand side, a series along the centreline and a series on the right-hand side of the tyre are provided.

In this manner it is possible not only to detect wear, but also to compare the readings coming from different areas of the tread in order to establish whether there is uneven wear.

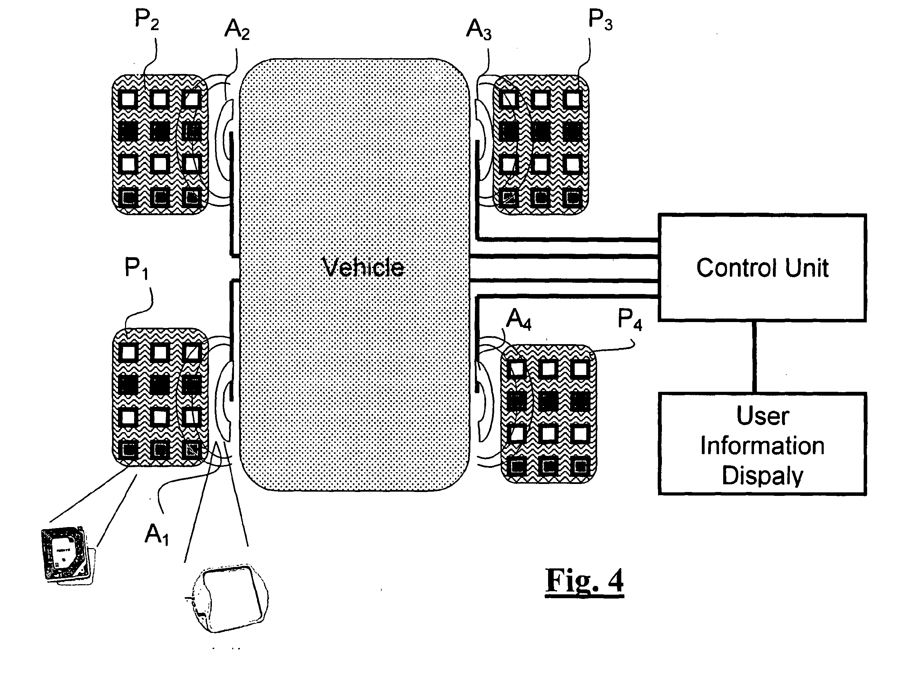

In fig. 4 is shown a general diagram of the system according to the invention applied to a motorvehicle. Each tyre P₁-P₄ is equipped with three series of four RFIDs each, and a receiving antenna A₁-A₄ is provided in proximity with each of the four wheelhouses. The four antennas A₁-A₄ are then linked by means of a wiring to the control unit in which the data management logic and, possibly, the identification code database are implemented. The control unit is further linked to a system which supplies information to the driver, such as an LCD display or a simple warning sound device.

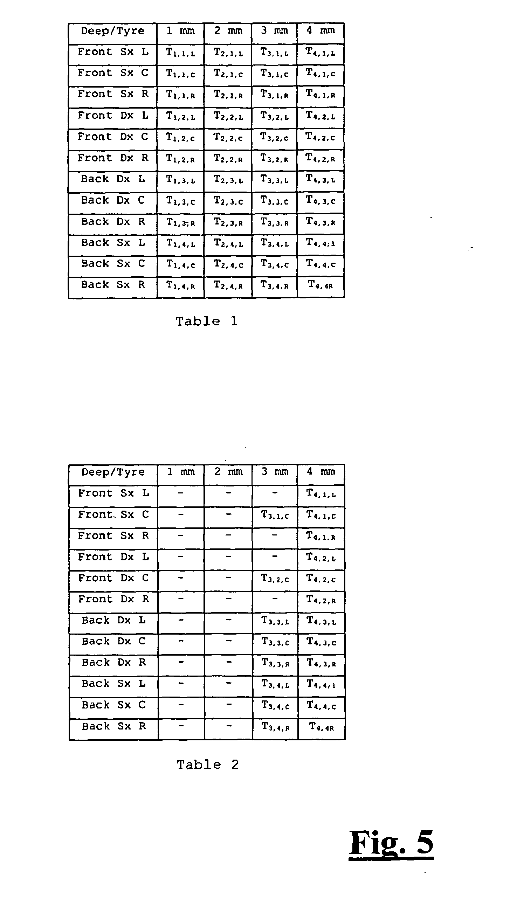

In table 1 of fig. 5 a reading matrix of this control unit with all four new tyres is schematically shown, where the presence of each RFID is marked by T_{d,p,w} (in which d: deep location, p: relevant tyre, w: position along the tyre width). Table 2 shows instead a possible reading in which a tolerable normal wear on the rear tyres and an uneven wear on the two front tyres (both with insufficient inflation pressure) is highlighted.

As can be guessed, the system of the invention brilliantly achieves the objects set out in the preamble.

As a matter of fact, by using the RFID and an interpretation by subtraction - i.e. one which obtains the tyre wear index from the absence of some signals compared with the condition of "new tyre" - the system of the invention allows to obtain the desired information in a comprehensive, economical, and most of all reliable way.

The inexpensiveness of the system further allows to multiply the number of passive identifiers and therefore to have a greater amount of information available which is differentiated according to the different tyre areas.

The tiny, passive-type RFIDs can be applied to the tyres not only during a manufacturing process specifically devised to this purpose, but also mounted later onto traditionally manufactured tyres, with conceivable savings in terms of logistics and system engineering.

It is understood, however, that the invention is not limited to the particular embodiments illustrated above, which represent only non-limiting examples of the scope of the invention, but that a number of changes and variations are possible, all within the reach of a skilled person in the field, without going beyond the scope of the invention.

For example, although an RFID has always been described that is fully embedded in the tread with an attitude substantially parallel to the tyre wear plane, the individual transponder TAG may also be arranged in a different way, or only partially embedded in a tread lug (the remaining part being, for example, bent over and externally glued onto a side of the lug), provided that at the moment the wear reaches the preset level, the repeated contact with the roadway makes the desired RFID inoperative (it can be sufficient to discontinue a coil of the inner aerial).

## Claims

1. Tyre wear detection system of a remote reading type, comprising a component integral with the tyre and a detection device integral with the vehicle onto which said tyre is mounted, whereby said component integral with the tyre consists of transponder TAGs, provided with an own unique identification code that can be remotely read, at least partly embedded in the tyre tread thickness at a preset depth and apt to be made inoperative when the tread thickness is reduced to said preset depth, **characterised in that**
said transponder TAGs are inserted at various depths into sequential blocks circumferentially staggered.

2. System as claimed in claim 1) in which said transponder TAGs are at least three for each preset depth, spread along the tread width.

3. System as claimed in claim 2), in which said at least three transponder TAGs are arranged along the tyre centreline and in proximity to the two shoulders thereof.

4. System as claimed in any of the previous claims, in which said unique identification code is a numeric code.

5. System as claimed in claim 4, in which, in addition to the unique identification code, said transponder TAG comprises storage means that can be set by the user.

6. System as claimed in any of the previous claims, in which said transponder TAGs are RFIDs with a thickness smaller than 0.5 mm.

7. System as claimed in claim 6), in which said RFIDs are of a passive type and operate at medium frequencies.

8. System as claimed in any one of claims 4) to 7), in which said detection device consists of an aerial for a transponder TAG linked to a control unit on board the vehicle, said unit being able to establish the tyre wear on the basis of the mapping of said transponder TAGs.

9. System as claimed in claim 8), in which said mapping is provided in said control unit in the form of a database in which each identification code is associated with the depth and position of the respective transponder TAG.

10. System as claimed in claim 8), in which said mapping is established as standard, and part of the identification code of each transponder TAG also identifies its position and depth in the tyre in a unique way.

11. System as claimed in claim 10), in which said mapping is in the form of further data contained in one of said transponder TAGs.

12. Tyre for a detection system as in any of the preceding claims, comprising at least one transponder TAG at least partially embedded in the tread at a preset depth and intended to be made inoperative when the tread wear reaches said preset depth, caracterised in that
said transponder TAGs are inserted at various depths into segmential blocks circumferentially staggered.

13. Tyre as claimed in claim 12), in which said transponder TAGs are RFIDs of a thickness smaller than 0.5 mm.

14. Tyre as claimed in claim 13), in which said RFIDs are of a passive type and operate at medium frequencies.

## Patentansprüche

1. Reifenverschleißerkennungssystem vom Fernerkennungstyp, mit einer Komponente, die dem Reifen zugehörig ist, und einem Erkennungsgerät, das dem Fahrzeug zugehörig ist, an dem der Reifen montiert ist, wobei die dem Reifen zugehörige Komponente aus Transponder TAGs besteht, die mit einem einzigartigen Identifikationscode versehen sind, der ohne Kontakt gelesen werden kann und wenigstens teilweise in die Dicke des Reifenprofils in einer vorgegebenen Tiefe eingebettet ist und dazu eingerichtet ist, inoperativ zu werden, wenn die Reifendicke auf die vorgegebene Tiefe reduziert ist, **dadurch gekennzeichnet, dass** die Transponder TAGs in verschiedenen Tiefen in sequentiellen Blöcken, die über dem Umfang gestaffelt sind.

2. System nach Anspruch 1, bei dem die Transponder TAGs wenigstens drei für jede vorgegebene Tiefe sind, verteilt über die Profilbreite.

3. System nach Anspruch 2, bei der die wenigstens drei Transponder TAGs entlang der Mittellinie des Reifens und in der Nähe zu dessen beiden Schultern angeordnet sind.

4. System nach einem der vorangehenden Ansprüche, bei dem der einzigartige Identifikationscode ein numerischer Code ist.

5. System nach Anspruch 4, bei dem der Transponder TAG zusätzlich zu dem einzigartigen Identifikationscode Speichermittel aufweist, die von dem Verwendet eingestellt werden können.

6. System nach einem der vorangehenden Ansprüche, bei dem die Transponder TAG RFID mit einer Dicke kleiner als 0,5 mm sind.

7. System nach Anspruch 6, bei dem die RFD vom passiven Typ sind und bei einer Mittenfrequenz arbeiten.

8. System nach einem der Ansprüche 5-7, bei dem das Erkennungsgerät aus einer Antenne für einen Transponder TAG, die mit einer Kontrolleinheit an Bord des Fahrzeugs verbunden ist, besteht, wobei die Einheit dazu in der Lage ist, den Reifenverschleiß auf der Basis des Mappens des Transponder TAGs festzustellen.

9. System nach Anspruch 8, wobei das Mappen der Kontrolleinheit einer Datenbasis erfolgt, in der jeder Identifikationscode mit der Tiefe und der Position des jeweiligen Transponder TAGs abgelegt ist.

10. System nach Anspruch 8, bei der das Mappen als Standard erstellt wird und ein Teil des Identifikationscodes jedes Transponders TAG auch dessen Position und Tiefe in dem Reifen in einer einzigartigen Weise identifiziert.

11. System nach Anspruch 10, bei der das Mappen in der Form von weiteren Daten, die in einem der Transponder TAG beinhaltet sind, erfolgt.

12. Reifen für ein Erkennungssystem nach einem der vorangehenden Ansprüche, weiter mit wenigstens einem Transponder TAG, der wenigstens teilweise dem Reifen in einer vorgegebenen Tiefe eingebettet ist und inoperativ wird, wenn der Verschleiß des Reifens die vorgegebene Tiefe erreicht, **dadurch gekennzeichnet, dass** die Transponder TAG in verschiedenen Tiefen in sequentiellen Blöcken, die über dem Umfang gestaffelt sind, eingebracht sind.

13. Reifen nach Anspruch 12, bei der die Transponder TAG RFID mit einer Dicke von weniger als 0,5 mm sind.

14. Reifen nach Anspruch 13, bei der die RFID vom passiven Typ sind und bei Mittenfrequenzen arbeiten.

## Revendications

1. Système de détection d'usure de pneumatique de type à lecture à distance, comprenant un composant intégré dans le pneumatique et un dispositif de détection intégré au véhicule sur lequel ledit pneumatique est monté, ce par quoi ledit composant intégré dans le pneumatique est constitué d'étiquettes (TAG) de répondeur, dotées d'un code d'identification unique propre qui peut être lu à distance, au moins partiellement intégrées dans l'épaisseur de bande de roulement de pneumatique à une profondeur prédéterminée et pouvant être rendues non fonctionnelles lorsque l'épaisseur de bande de roulement est réduite à ladite profondeur prédéterminée, **caractérisé en ce que** lesdites étiquettes (TAG) de répondeur sont introduites à des profondeurs diverses en blocs séquentiels circonférentiellement étagés.

2. Système selon la revendication 1, dans lequel lesdites étiquettes (TAG) de répondeur sont au moins au nombre de trois pour chaque profondeur prédéterminée, réparties sur la largeur de bande de roulement.

3. Système selon la revendication 2, dans lequel lesdites au moins trois étiquettes (TAG) de répondeur sont agencées le long de l'axe central du pneumatique et à proximité de ses deux épaulements.

4. Système selon l'une quelconque des revendications précédentes, dans lequel ledit code d'identification unique est un code numérique.

5. Système selon la revendication 4, dans lequel, en plus du code d'identification unique, ladite étiquette (TAG) de répondeur comprend un moyen de mémorisation qui peut être instauré par l'utilisateur.

6. Système selon l'une quelconque des revendications précédentes, dans lequel lesdites étiquettes (TAG) de répondeur sont des dispositifs d'identification radiofréquence (RFID, pour *Radio Frequency Identification Devices*) ayant une épaisseur inférieure à 0,5 mm.

7. Système selon la revendication 6, dans lequel lesdits dispositifs d'identification radiofréquence (RFID) sont de type passif et fonctionnent à des moyennes fréquences.

8. Système selon l'une quelconque des revendications 4 à 7, dans lequel ledit dispositif de détection est constitué d'une antenne destinée à une étiquette (TAG) de répondeur en liaison avec une unité de commande embarquée sur le véhicule, ladite unité pouvant établir l'usure de pneumatique sur la base du mappage desdites étiquettes (TAG) de répondeur.

9. Système selon la revendication 8, dans lequel ledit mappage est obtenu dans ladite unité de commande sous la forme d'une banque de données dans laquelle chaque code d'identification est associé à la profondeur et à la position de l'étiquette (TAG) de répondeur respective.

10. Système selon la revendication 8, dans lequel ledit mappage est établi en tant que standard, et une partie dudit code d'identification de chaque étiquette (TAG) de répondeur identifie également, de façon unique, sa position et sa profondeur dans le pneumatique.

11. Système selon la revendication 10, dans lequel ledit mappage est sous la forme de données supplémentaires contenues dans l'une desdites étiquettes (TAG) de répondeur.

12. Pneumatique pour un système de détection selon l'une quelconque des revendications précédentes, comprenant au moins une étiquette (TAG) de répondeur au moins partiellement intégrée dans la bande de roulement à une profondeur prédéterminée et prévue pour être rendue non fonctionnelle lorsque l'usure de bande de roulement atteint ladite profondeur prédéterminée, **caractérisé en ce que**
lesdites étiquettes (TAG) de répondeur sont introduites à des profondeurs diverses en blocs séquentiels circonférentiellement étagés.

13. Pneumatique selon la revendication 12, dans lequel lesdites étiquettes (TAG) de répondeur sont des dispositifs d'identification radiofréquence (RFID) ayant une épaisseur inférieure à 0,5 mm.

14. Pneumatique selon la revendication 13, dans lequel lesdits dispositifs d'identification radiofréquence (RFID) sont de type passif et fonctionnent à des moyennes fréquences.
